# EUROPÄISCHE PATENTANMELDUNG

(11) **EP 2 422 859 A2**
(43) Veröffentlichungstag der Anmeldung: **29.02.2012**
(21) Anmeldenummer: 11177197.8
(22) Anmeldetag: 11.08.2011
(51) Int. Cl.: B01D 1/00, C02F 1/16

(54) **Abwasseraufbereitung in einer Papierfabrik**

(30) Priorität: 23.08.2010 DE 102010035171
(71) Anmelder: SIEMENS AKTIENGESELLSCHAFT, 80333 München (DE)
(72) Erfinder: Hauser, Andreas, 288061 Singapore (SG); Schwarz, Hermann, 97084 Würzburg (DE); Schäfer, Jochen, 90402 Nürnberg (DE)

(57) **Zusammenfassung**

Die Erfindung betrifft ein Verfahren und ein System zur Abwasseraufbereitung in einer Papierfabrik (1) sowie die Verwendung eines Abwasserreinigungsprozesses und eine mit einer erfindungsgemäßen Abwasseraufbereitung ausgestattete Papierfabrik (1). Der Erfindung liegt die Aufgabe zugrunde, eine Abwasseraufbereitung für eine Papierfabrik (1) anzugeben, durch die der Einsatz von Primärenergie und Frischwasser reduziert wird. Diese Aufgabe wird bei einem Verfahren der eingangs genannten Art dadurch gelöst, dass zumindest ein Abwassermassenstrom (2) der Papierfabrik (1) einem thermischen Trennverfahren (3) zugeführt wird, wobei der Abwassermassenstrom (2) in ein Konzentrat (4) und ein Kondensat (5) aufgeteilt wird, dass das Kondensat (5) zumindest einem Frischwassermassenstrom (6) der Papierfabrik (1) zugeführt wird und dass zur Energieversorgung des thermischen Trennverfahrens zumindest eine externe Quelle niedergrädiger Wärme und/oder eine Abwärmequelle (7) aus der Papierfabrik (1) und/oder eine Abwärmequelle aus einer dezentralen Wärme- und/oder Stromversorgungseinheit für die Papierfabrik (1) verwendet wird.

## Beschreibung

Die Erfindung betrifft ein Verfahren und ein System zur Abwasseraufbereitung in einer Papierfabrik sowie die Verwendung eines Abwasserreinigungsprozesses und eine mit einer erfindungsgemäßen Abwasseraufbereitung ausgestattete Papierfabrik.

Ein derartiges Verfahren bzw. System kommt auf dem Gebiet der Papierherstellung zum Einsatz. Die Herstellung von Papier ist mit einem hohen Aufwand an Energie und Wasser verbunden. Dies ist insbesondere angesichts der zunehmenden Knappheit von Primärenergieträgern und Frischwasser sowohl ökologisch als auch ökonomisch problematisch.

Für die Papierproduktion wird viel Wasser benötigt. Zur Zeit steht der durchschnittliche Wasserverbrauch bei 10 Liter pro kg Papier. Der Energieverbrauch liegt bei 3000 kWh je kg Papier (pts Umfrage 2007, veröffentlicht 2009 in Wochenblatt für Papierfabrikation). Der hohe thermische Energieverbrauch ergibt sich aus der Trocknung des Papiers in der Trockenpartie der Papiermaschine und der Prozesstemperatur, die bei 40°C bis 70°C liegen kann je nach Produktion. Die Prozesstemperatur entspricht der Temperatur des Prozesswassers. Bei dieser Temperatur lässt sich die Fasersuspension optimal entwässern und die zugegebenen Additive rsp. Chemikalien entfalten ihre optimale Effizienz.

Bisher wird das Frischwasser, das seiner Herkunft nach aus Quellen oder aus Uferfiltrat (Oberflächenwasser) stammt, durch Dampf direkt oder indirekt über mit Prozesswasser gespeiste Wärmetauscher auf Prozesstemperatur gebracht. Dieses erwärmte Frischwasser, das mit dem Prozesswasser der Papierproduktion und anderen Wässern gemischt wird, fällt mit allen Wasserqualitäten der Papierproduktion in der Wasseraufbereitung an und wird gereinigt aus dem Prozess ausgeschleust oder teilweise zurückgeführt. Die eingebrachte Prozesswärme zur Aufwärmung des Frischwassers geht verloren.

Der bisherige Abwasserreinigungsprozess basiert auf einer mechanischen fest/flüssig-Trennung, die die Feststoffe aus dem zu reinigenden Wasser ausschleust, gefolgt von einer biologischen Stufe, die die gelösten organischen Stoffe abbaut. Bei diesem Abbauprozess wird gleichzeitig Bioschlamm aufgebaut, der entwässert und entsorgt werden muss. Bei dem jetzigen Stand kann eine mechanische Entwässerung nur bis 30% Trockengehalt stattfinden, d.h. 70% des entwässerten Schlamms ist Wasser und geht verloren. Dieser Verlust muss durch Frischwasser wieder ausgeglichen werden. Das gleiche gilt für die Entwässerung von Reststoffen aus der Papieraufbereitung; auch hier geht 50% des Reststoffanfalls als Wasser verloren. Es handelt sich jeweils um hohe Wasser-/Abfallströme, die durch ihre Ausschleusung auch Wärme ausschleusen, die durch Aufheizen des Frischwassers (15°C im Durchschnitt) auf Prozesstemperatur wieder aufgebracht werden muss.

Der Erfindung liegt die Aufgabe zugrunde, eine Abwasseraufbereitung für eine Papierfabrik anzugeben, durch die der Einsatz von Primärenergie und Frischwasser reduziert wird.

Diese Aufgabe wird bei einem Verfahren der eingangs genannten Art dadurch gelöst, dass zumindest ein Abwassermassenstrom der Papierfabrik einem thermischen Trennverfahren zugeführt wird, wobei der Abwassermassenstrom in ein Konzentrat und ein Kondensat aufgeteilt wird, dass das Kondensat zumindest einem Frischwassermassenstrom der Papierfabrik zugeführt wird und dass zur Energieversorgung des thermischen Trennverfahrens zumindest eine externe Quelle niedergrädiger Wärme und/oder eine niedergrädige Abwärmequelle aus der Papierfabrik und/oder eine niedergrädige Abwärmequelle aus einer dezentralen Wärme- und/oder Stromversorgungseinheit für die Papierfabrik verwendet wird, wobei das thermische Trennverfahren als mehrstufiges Verdunstungsverfahren und/oder als Membrandestillation ausgebildet ist.

Erfindungsgemäß wird der notwendige Frischwassermassestrom und der anfallende Abwassermassestrom in einer Papierfabrik durch ein thermisches Trennverfahren reduziert.

Dabei wird als thermisches Trennverfahren ein mehrstufiges Verdunstungsverfahren und/oder eine Membrandestillation verwendet. Diese ermöglichen die Nutzung von Abwärmequellen mit Temperaturen ab 60°C, d.h. von Wärme, die ansonsten kaum wirtschaftlich nutzbar ist. Ein weiterer Vorteil des mehrstufigen Verdunstungsverfahrens und der Membrandestillation sind die hohen erreichbaren Wasserreinheiten, die eine problemlose Nutzung des Permeats (Kondensats) als Frischwasser ermöglichen.

Die Membrandestillation ist eine Mischung aus thermischem und Membran-Entsalzungsverfahren, bei dem eine mikroporöse Membran eingesetzt wird, die nur Wasserdampf durchlässt, flüssiges Wasser jedoch zurückhält (aus gleichlautendem Wikipedia-Artikel).

Durch das Trennverfahren wird der Abwasserstrom in Retentat (Konzentrat) und Permeat (Kondensat) aufgeteilt. Das Permeat wird in den Prozess zurückgeführt und senkt so den Nutz- bzw. Frischwasserbedarf. Das Retentat ist im Vergleich zum Abwassermassestrom (=Eingangsmassenstrom in die thermische Trenneinheit) deutlich kleiner.

Auf dem Temperaturniveau zwischen 70°C und 140°C gibt es in Papierfabriken oder in Systemen zur Wärme- und Stromversorgung von Papierfabriken wie bspw. Blockheizkraftwerken Abwärmequellen, die derzeit selten vollständig genutzt werden. Es ist auch möglich, eine externe Quelle niedergrädiger Wärme und damit meist kostengünstiger Energie zu verwenden. Die erfindungsgemäße Nutzung eines thermischen Trennverfahrens ermöglicht generell die Nutzung niedergrädiger Abwärme zur Reduzierung des notwendigen Frischwassermassestroms und des anfallenden Abwassermassestroms. Dabei bezeichnet "niedergrädig" einen Temperaturbereich von ca. 60°C bis 160°C, und insbesondere bei der Nutzung in Papierfabriken von ca. 70°C bis 140°C, da hier häufig entsprechende Abwärmequellen vorhanden sind.

Hierdurch sinken die Kosten für das zu beziehende Frischwasser und zu entsorgende Abwasser. Zusätzlich können Hilfssysteme wie bspw. Anlagen zur Speise- und Kesselwasseraufbereitung sowie Systeme zur Abwasseraufbereitung kleiner dimensioniert werden.

Die Aufgabe wird weiter gelöst durch ein System zur Abwasseraufbereitung mit den Merkmalen gemäß Anspruch 3 sowie durch eine Papierfabrik mit den Merkmalen gemäß Anspruch 5.

In einer vorteilhaften Ausführungsform wird das Konzentrat hoch aufkonzentriert und zur Verbrennung und/oder zum Recycling verwertet. Insbesondere organisch belastete Abwässer können durch eines der oben genannten Verfahren soweit aufkonzentriert werden, dass sowohl die Verbrennung als auch Wiederverwendung (Recycling) als wirtschaftliche Verwertungspfade offen stehen. Ist dieses der Fall, gilt das Konzentrat als "hoch aufkonzentriert".

Im Folgenden wird die Erfindung anhand der in den Figuren dargestellten Ausführungsbeispiele näher beschrieben und erläutert. Es zeigen:
- FIG 1: eine erfindungsgemäße Abwasseraufbereitung mit Abwärmenutzung aus dem Papierherstellungsprozess,
- FIG 2: eine erfindungsgemäße Abwasseraufbereitung mit Abwärmenutzung aus einer Wärme- und/oder Stromversorgungseinheit der Papierfabrik,
- FIG 3: eine Abwasseraufbereitung gemäß Fig 2 mit thermischer Nutzung des Konzentrats.

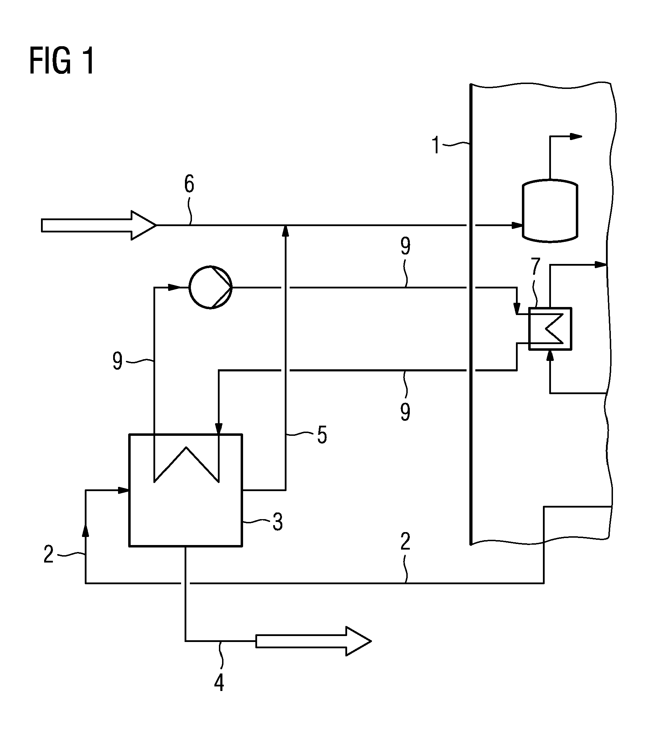

Fig 1 zeigt eine schematische Darstellung eines Ausschnitts aus einer Papierfabrik 1, der ein Frischwassermassenstrom 6 zugeführt wird und in der im Laufe des Herstellungsprozesses ein Abwassermassenstrom 2 anfällt. Dieser wird gemäß der erfindungsgemäßen Lösung einem thermischen Trennverfahren 3 zugeführt, in dem der Abwassermassenstrom 2 in ein Konzentrat 4 und ein Kondensat 5 aufgeteilt wird. Dieser Reinigungsprozess ist effektiver als die herkömmlich in Papierfabriken 1 verwendeten Abwasserreinigungsprozesse, so dass weniger Konzentrat 4 zur Entsorgung anfällt als bisher. Das gereinigte Wasser 5 wird einem Frischwassermassenstrom 6 für die Papierfabrik 1 zugeführt, so dass auch weniger Frischwasser 6 als bislang üblich verbraucht wird. Für das thermische Trennverfahren 3 wird eine Abwärmequelle 7 aus der Papierfabrik 1 verwendet, wobei die Abwärme durch einen Wärmetauscherkreislauf 9 (mit einem Wärmeträgerfluid) auf die Vorrichtung zur Durchführung des thermischen Trennverfahrens 3 übertragen wird. Im Sinne einer schematischen Darstellung ist das thermische Trennverfahren 3 mit der entsprechenden Vorrichtung 3 und die jeweiligen Massenströme mit den zugehörigen Leitungen gleichzusetzen. Ebenso ist die Abwasseraufbereitung für eine übersichtliche Darstellung besonders dargestellt, auch wenn sie im Sinne der Erfindung zur Papierfabrik 1 gehört. Die erfindungsgemäße Lösung ermöglicht die Nutzung von Abwärme 7 aus dem Papierherstellungsprozess zur Reduzierung des Frischwasserbedarfs 6 und des Abwassermassenstroms 2 (bzw. des Konzentrats 4).

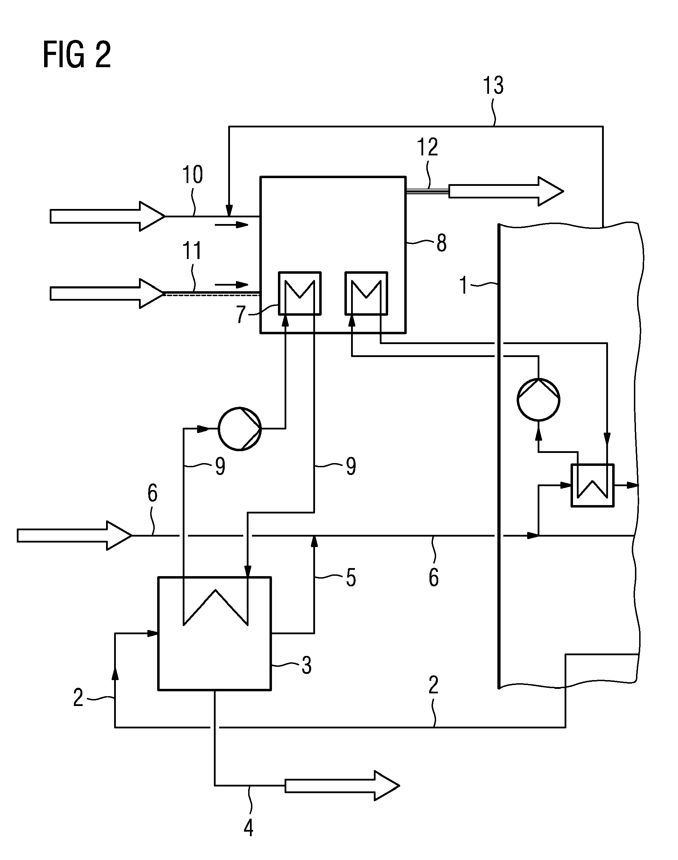

Fig 2 zeigt wiederum eine schematische Darstellung eines Ausschnitts einer Papierfabrik 1, bei der ein Abwassermassenstrom 2 durch ein thermisches Trennverfahren 3 in ein Konzentrat 4 und ein Kondensat 5, das dem Frischwassermassenstroms 6 wieder zugeführt wird, aufgeteilt wird. Für das thermische Trennverfahren 3 wird in dem hier gezeigten Ausführungsbeispiel eine Abwärmequelle 7 einer Wärme- und/oder Stromversorgungseinheit 8 für die Papierfabrik 1 genutzt, wobei die Wärmeübertragung wiederum durch einen Wärmetauscherkreislauf 9 erfolgt. Die Wärme- und/oder Stromversorgungseinheit 8 versorgt natürlich die Papierfabrik 1 mit Energie und sorgt zum Beispiel für eine Aufwärmung des Frischwassermassenstroms 6 auf Prozesstemperatur. Die Wärme- und/oder Stromversorgungseinheit 8 ist beispielsweise als Blockheizkraftwerk ausgeführt und verbraucht zur Energieerzeugung natürlich Brennstoffe 10 und Luft 11 unter Abgabe von Abgasen 12. Reststoffe 13 aus der Papierfabrik 1 können dabei zumindest teilweise auch als Brennstoffe 13 genutzt werden und werden der Brennstoffzufuhr 13 zugeführt. In diesem Ausführungsbeispiel ermöglicht die erfindungsgemäße Lösung die Nutzung von Wärme 7 aus dem System 8 zur Wärme- und Strombereitstellung zur Reduzierung des Frischwasserbedarfs 6 und des Abwassermassenstroms 2 (bzw. des Konzentrats 4) in einer Papierfabrik 1.

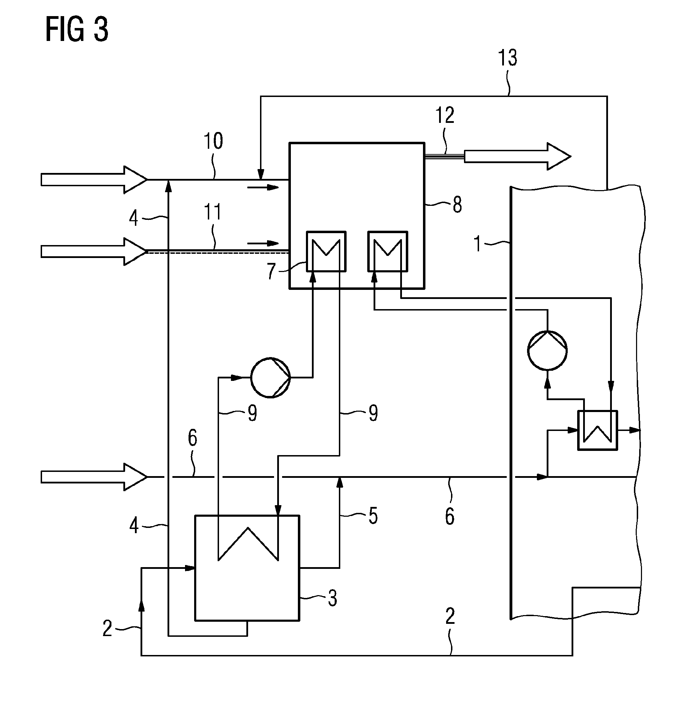

Fig 3 zeigt ein ähnliches Ausführungsbeispiel wie das in Fig 2 dargestellte, wobei das Konzentrat 4 soweit aufkonzentriert wird, dass es als Brennstoff 10 für das Blockheizkraftwerk 8 nutzbar ist und entsprechend der hierfür vorgesehenen Brennstoffzufuhr 10 zugeführt wird. Dieses Ausführungsbeispiel zeigt also die Nutzung von Abwärme 7 aus dem System 8 zur Wärme- und Strombereitstellung zur Reduzierung des Frischwasserbedarfs 6 und des Abwassermassenstroms 2 (das heißt des Konzentrats 4) in einer Papierfabrik 1 mit thermischer Nutzung des Konzentrats 4, wobei zu entsorgendes Abwasser idealerweise vollständig entfällt. Für eine Erläuterung der weiteren Bezugszeichen siehe Fig 2.

Zusammenfassend betrifft die Erfindung ein Verfahren und ein System zur Abwasseraufbereitung in einer Papierfabrik sowie die Verwendung eines Abwasserreinigungsprozesses und eine mit einer erfindungsgemäßen Abwasseraufbereitung ausgestattete Papierfabrik. Der Erfindung liegt die Aufgabe zugrunde, eine Abwasseraufbereitung für eine Papierfabrik anzugeben, durch die der Einsatz von Primärenergie und Frischwasser reduziert wird. Diese Aufgabe wird bei einem Verfahren der eingangs genannten Art dadurch gelöst, dass zumindest ein Abwassermassenstrom der Papierfabrik einem thermischen Trennverfahren zugeführt wird, wobei der Abwassermassenstrom in ein Konzentrat und ein Kondensat aufgeteilt wird, dass das Kondensat zumindest einem Frischwassermassenstrom der Papierfabrik zugeführt wird und dass zur Energieversorgung des thermischen Trennverfahrens zumindest eine Abwärmequelle aus der Papierfabrik und/oder aus einer dezentralen Wärme- und/oder Stromversorgungseinheit für die Papierfabrik verwendet wird.

## Patentansprüche

1. Verfahren zur Abwasseraufbereitung in einer Papierfabrik (1),
**dadurch gekennzeichnet,**
**dass** zumindest ein Abwassermassenstrom (2) der Papierfabrik (1) einem thermischen Trennverfahren (3) zugeführt wird, wobei der Abwassermassenstrom (2) in ein Konzentrat (4) und ein Kondensat (5) aufgeteilt wird, dass das Kondensat (5) zumindest einem Frischwassermassenstrom (6) der Papierfabrik (1) zugeführt wird und dass zur Energieversorgung des thermischen Trennverfahrens (3) zumindest eine externe Quelle niedergrädiger Wärme und/oder eine niedergrädige Abwärmequelle (7) aus der Papierfabrik (1) und/oder eine niedergrädige Abwärmequelle (7) aus einer dezentralen Wärme- und/oder Stromversorgungseinheit (8) für die Papierfabrik (1) verwendet wird, wobei als thermisches Trennverfahren (3) ein mehrstufiges Verdunstungsverfahren und/oder eine Membrandestillation verwendet wird.

2. Verfahren nach Anspruch 1,
wobei das Konzentrat (4) hoch aufkonzentriert und zur Verbrennung und/oder zum Recycling verwerten wird.

3. System zur Abwasseraufbereitung in einer Papierfabrik (1), aufweisend zumindest eine Vorrichtung (3) zur Durchführung eines thermischen Trennverfahrens (3), Leitungen (2) zur Zuführung zumindest eines Abwassermassenstroms (2) der Papierfabrik (1) zu der Vorrichtung (3), durch die der Abwassermassenstrom (2) in ein Konzentrat (4) und ein Kondensat (5) aufteilbar ist, Leitungen (5) zur Zuführung des Kondensats (5) zu zumindest einem Frischwassermassenstrom (6) sowie zumindest einen Wärmetauscherkreislauf (9) zur Energieversorgung der Vorrichtung (3), mittels dem Wärme einer externen Quelle niedergrädiger Wärme und/oder einer niedergrädigen Abwärmequelle (7) aus der Papierfabrik (1) und/oder einer niedergrädigen Abwärmequelle (7) aus einer dezentralen Wärme- und/oder Stromversorgungseinheit (8) für die Papierfabrik (1) übertragbar ist, wobei das thermische Trennverfahren (3) als mehrstufiges Verdunstungsverfahren und/oder als Membrandestillation ausgebildet ist.

4. System nach Anspruch 3,
mit Mitteln (4) zur Verbringung des Konzentrats (4) in eine Brennstoffzufuhr (10) der dezentralen Wärme- und/oder Stromversorgungseinheit (8) für die Papierfabrik (1).

5. Papierfabrik (1) mit einem System zur Abwasseraufbereitung nach einem der Ansprüche 3-4.
